# EUROPEAN PATENT APPLICATION

(11) **EP 3 493 199 A1**
(43) Date of publication of application: **05.06.2019**
(21) Application number: 17834321.6
(22) Date of filing: 25.07.2017
(51) Int. Cl.: G10K 11/162, B60R 13/08, D01F 6/38

(54) **FIBERS FOR SOUND ABSORBING/INSULATING MATERIAL, USE OF SAID FIBERS, MANUFACTURING METHOD FOR FIBERS FOR SOUND ABSORBING/INSULATING MATERIAL, AND FIBER-MOLDED PRODUCT FOR SOUND ABSORBING/INSULATING MATERIAL**

(30) Priority: 27.07.2016 JP 2016146896
(71) Applicant: Mitsubishi Chemical Corporation, Tokyo 100-8251 (JP)
(72) Inventor: INAGAKI, Tatsuhiko, Tokyo 100-8251 (JP)
(74) Representative: Hoffmann Eitle
(86) International application number: PCT/JP2017/026884
(87) International publication number: WO 2018/021319

(57) **Abstract**

The present invention addresses the problem of providing fiber of 0.01-0.5 dtex which are used for a sound absorbing/insulating material and with which a fiber assembly with excellent sound absorbing/insulating effects can be obtained. The present invention also addresses the problem of providing a fiber-molded product for sound absorbing/insulating material in which said fiber is used, the product being suitable for a sound absorbing effect of sound less than or equal to 1,000 Hz. The problem can be solved by, in the fiber-molded product described below, providing fiber for sound absorbing/insulating material having a single-fiber fineness of 0.01-0.5 dtex in which the average value of the normal incidence sound absorption coefficient of the fiber-molded product for sound having a frequency of 200-1,000 Hz is 40% or more, and by using the fiber for sound absorbing/insulating material to mold the fiber-molded product for sound absorbing/insulating material. (Fiber-molded product) 70 mass% of fiber for sound absorbing/insulating material having a fiber length of 40 mm, and 30 mass% of polyester thermally fusible fibers having a single-fiber fineness of 2.2 dtex, a fiber length of 51 mm, and a melting point of 110 °C are mixed; heated at 170 °C for 20 minutes; and then cooled to form a fiber-molded product having a thickness of 30 mm and a basis weight of 1,200 g/m².

## Description

### TECHNICAL FIELD

The present invention relates to a fiber for sound absorbing/insulating material suitable for forming a fiber assembly with excellent sound absorbing/insulating effects having a frequency of 1000 Hz or lower, use of the fiber, a manufacturing method of a fiber for sound absorbing/insulating material, and a fiber-molded product for sound absorbing/insulating material. The present invention also relates to a fiber for sound absorbing/insulating material and a fiber-molded product for sound absorbing/insulating material which are used for interior and exterior materials for automobile bodies, houses or the like enhance quietness in a room.

### BACKGROUND ART

Sound absorbing/insulating material is used in various fields from components for vehicles used for trains and automobiles to electric appliances such as vacuum cleaners and the like.

For example, noises coming in a car room of an automobile can be classified into two categories; noises resulting from sound generated in an engine and come in through the automobile body, and noises resulting from noises generated when tires and a street surface are contacted come in through the automobile body.

As methods for buffering such noises, there are following ones; that is, a method of insulating incoming noise with a sound insulating material, and a method of absorbing incoming noise into a sound absorbing material.

Sound insulating means that generated acoustic energy is reflected and insulated by a screening object, and sound absorbing means that generated acoustic energy is converted to thermal energy and diminished while being transmitted along an inner path of a material.

Generally, improvement of sound absorbing/insulating properties is accompanied by an increase of weight of absorbing/insulating materials. Though, recently and particularly in the automobile field, a need for improvement of fuel efficiency and resource saving has been rapidly rising, and weight saving of absorbing/insulating materials is strongly required.

To resolve a conflicting problem between absorbing/insulating properties and weight saving, a material which has both an excellent sound insulating property with respect to the transmitted sound and efficient sound absorbing property with respect to noises coming from the other transmission paths (windows and the like), in other words, which has an excellent balance between sound absorbing and sound insulating properties, is required.

For example, an engine noise transmitted from a dash part, which accounts for 50% or more of noises in an car room, mainly has a frequency of about 100-1000 Hz. Therefore, it is required to absorb and insulate the above frequency range of sounds efficiently.

For this purpose, for example in Patent Literature 1, it is proposed that a synthetic short fiber is molded into a mat shape to be a sound absorbing material. A synthetic fiber of 1-50 denier is used instead of a generally-used glass fiber, but a weight becomes large to achieve a sufficient sound absorption effect, which conflicts with weight saving of bodies such as automobiles.

In Patent Literature 2, a soundproof material containing a polyester fiber having a single fiber fineness of 0.6 dtex is proposed, but a sound absorbing effect was not sufficient. Moreover, there is a problem that when a single fiber fineness becomes small, a manufacturing cost becomes too high.

In Patent Literature 3, a sound absorbing sheet which is produced by combining a glass fiber and a cellulose fiber is provided. However, a sound absorbing property is changed by controlling a physical amount of the sheet, and weight saving is not achieved.

### CITATION LIST

### PATENT LITERATURE

Patent Literature 1: JP2002-242066 A
Patent Literature 2: JP 2016-034828 A
Patent Literature 3: JP 2014-521995 A

### SUMMARY OF THE INVENTION

### PROBLEM TO BE SOLVED BY THE INVENTION

An objective of the present invention is to provide a fiber for sound absorbing/insulating material which is used for sound absorbing/insulating materials and has a single fiber fineness of 0.01-0.5 dtex by which a fiber assembly with excellent sound absorbing/insulating effect can be obtained, a manufacturing method of the fiber for sound absorbing/insulating material, and a fiber-molded product for sound absorbing/insulating material using the fibers suitable for a sound absorbing effect having a frequency of 1000 Hz or lower.

### MEANS FOR SOLVING PROBLEM

1. A fiber for sound absorbing/insulating material in which, when the fiber has a single fiber fineness of 0.01-0.5 dtex and is formed to be a fiber-molded product described below, an average value of a normal incidence sound absorption coefficient of the fiber-molded product for sound having a frequency of 200-1000 Hz is 40% or more. (fiber-molded product)
   70 mass% of the fiber for sound absorbing/insulating material having a fiber length of 40 mm, and 30 mass% of polyester thermally fusible fiber having a single fiber fineness of 2.2 dtex, a fiber length of 51 mm, and a melting point of 110 °C are mixed; heated at 170 °C for 20 minutes; and then cooled to form the fiber-molded product having a thickness of 30 mm and a basis weight of 1200 g/m².
2. The fiber for sound absorbing/insulating material described in the above 1, in which, in the fiber-molded product, the average value of the normal incidence sound absorption coefficient for sound having a frequency of 315-800 Hz is 40% or more.
3. The fiber for sound absorbing/insulating material described in the above 1 or 2, in which, in the fiber-molded product, the average value of the normal incidence sound absorption coefficient for sound having a frequency of 400-630 Hz is 38% or more.
4. The fiber for sound absorbing/insulating material described in any one of the above 1 to 3, in which the fiber for sound absorbing/insulating material is an acrylic fiber.
5. The fiber for sound absorbing/insulating material described in any one of the above 1 to 4, in which a fiber length of the single fiber is 3-60 mm.
6. The fiber for sound absorbing/insulating material described in any one of the above 1 to 5, in which the number of crimps is 8-14 pieces/25 mm and the rate of crimp is 5-9 %.
7. The fiber for sound absorbing/insulating material described in any one of the above 1 to 6, in which, in the fiber-molded product, the average value of the normal incidence transmission loss for sound having a frequency of 200-4000 Hz is 9.0 dB or more.
8. The fiber for sound absorbing/insulating material described in any one of the above 1 to 7, in which the average value of the normal incidence transmission loss for sound having a frequency of 200-1000 Hz is 6.3 dB or more.
9. A manufacturing method of a fiber for sound absorbing/insulating material in which acrylonitrile copolymer is dissolved with a solvent, and a spinning solution having a solid content concentration of 10-30 mass% is discharged from a discharge hole of a spinning nozzle into an aqueous solution having a temperature of 20-60 °C and a solvent concentration of 25-50 mass% to have a single fiber fineness of 0.01-0.5 dtex.
10. A use of a fiber as a sound absorbing/insulating material in which, when the fiber has a single fiber fineness of 0.01-0.5 dtex, and is formed to be a fiber-molded product described below, an average value of a normal incidence sound absorption coefficient of the fiber-molded product for sound having a frequency of 200-1000 Hz is 40% or more.
   (fiber-molded product)
   70 mass % of the fiber for sound absorbing/insulating material having a fiber length of 40 mm, and 30 mass% of polyester thermally fusible fiber having a single fiber fineness of 2.2 dtex, a fiber length of 51 mm, and a melting point of 110 °C are mixed; heated at 170 °C for 20 minutes; and then cooled to form a fiber-molded product having a thickness of 30 mm and a basis weight of 1200 g/m².
11. A fiber-molded product for sound absorbing/insulating material containing a fiber for sound absorbing/insulating material having a single fiber fineness of 0.01-0.5 dtex (hereinafter, it is also referred to as "fiber L"), a thermally fusible fiber, and if necessary, a fiber other than the fiber L and the thermally fusible fiber and having a single fiber fineness of more than 0.5 dtex and of 1.0 dtex or less (hereinafter, it is also referred to as "fiber M"),
   having a basis weight D of 400-2000 g/m² and a thickness of 20-50 mm, and
   satisfying the following condition (1) or (2).
   (1) A content C of fiber L is 20-90 mass% and a relationship between the basis weight D (g/m²) and the content C of fiber L (mass%) satisfies a condition: D ≥ 1600-30 × C.
   (2) A content of fiber L is 5-30 mass%, further fiber M is contained, and the sum of content of fiber L and fiber M is 40-90 mass%.
12. The fiber-molded product for sound absorbing/insulating material described in the above 11, in which an average value of a normal incidence sound absorption coefficient for sound having a frequency of 200-1000 Hz is 40% or more.
13. The fiber-molded product described in the above 11 or 12, in which fiber L is an acrylic fiber.
14. The fiber-molded product for sound absorbing/insulating material described in any one of the above 11 to 13, in which the average value of the normal incidence transmission loss for sound having a frequency of 200-4000 Hz is 9.0 dB or more.
15. The fiber-molded product for sound absorbing/insulating material described in any one of the above 11 to 14 containing 10-50 mass% thermally fusible fiber which is partially melted and fixed with each other.
16. Further, the fiber-molded product for sound absorbing/insulating material described in any one of the above 11 to 15, in which a content of fiber N other than the thermally fusible fiber and having a single fiber fineness of more than 1.0 dtex is 5-70 mass%.

### EFFECT OF THE INVENTION

By the invention, a fiber for sound absorbing/insulating material which can form a fiber-molded product with excellent sound absorbing/insulating properties for sound having a frequency of 1000 Hz or lower, particularly the fiber for sound absorbing/insulating material which is used for interior and exterior materials such as automobile bodies or houses and enhances quietness in a room can be obtained.

Further, by using the fiber, a fiber-molded product with excellent sound absorbing/insulating properties for sound having a frequency of 1000 Hz or lower.

### BRIEF DESCRIPTION OF DRAWINGS

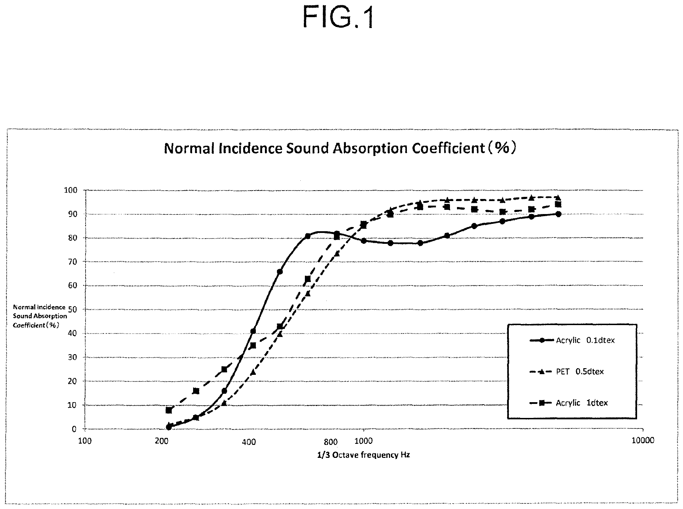

Fig. 1 is a drawing showing measurement values of the normal incidence sound absorption coefficient (%) of fiber A obtained in Example 1 [acrylic 0.1 dtex], fiber E obtained in Reference Example 1 [acrylic 1 dtex] and fiber F obtained in Comparative Example 1 [polyester (PET) : 0.5 dtex].

### MODE(S) FOR CARRYING OUT THE INVENTION

Hereinafter, the invention is explained in detail.

The fiber for sound absorbing/insulating material of the invention has a single fiber fineness of 0.01-0.5 dtex and the average value of the normal incidence sound absorption coefficient at 40% or more for sound having a frequency of 200-1000 Hz.

The measurement method of the normal incidence sound absorption coefficient is measured depending on JIS A 1405-2 in a case that 70 mass % of fiber for sound absorbing/insulating material having a fiber length of 40 mm, and 30 mass% of polyester thermally fusible fiber having a fiber length of 51 mm and a melting point of 110 °C are mixed; heated at 170 °C for 20 minutes; and cooled to form a fiber-molded product having a thickness of 30 mm and a basis weight of 1200 g/m².

In a case that the single fiber fineness is 0.01 dtex or more, handleability of the fiber in manufacturing the molded product is excellent and the manufacturing cost does not become excessively high. In a case that the single fiber fineness is 0.5 dtex or less, excellent sound absorbing/insulating properties can be obtained. From these viewpoints, the single fiber fineness is more preferably 0.05-0.4 dtex, and further preferably 0.1-0.3 dtex.

In a case that the average value of the normal incidence sound absorption coefficient for sound having a frequency of 200-1000 Hz is 40% or more, an effect for buffering an engine sound and a transmitted sound from the dash part is excellent. From this viewpoint, the average value of the normal incidence sound absorption coefficient is more preferably 43% or more, and further preferably 46% or more.

It is preferable that, the fiber for sound absorbing/insulating material of the invention has the average value of the normal incidence sound absorption coefficient for sound having a frequency of 315-800 Hz at 40% or more.

The fiber for sound absorbing/insulating material of the invention has a particular excellency in the normal incidence sound absorption coefficient for sound having a frequency of 315-800 Hz, and is excellent in sound absorption/insulation of the engine sound. From this viewpoint, the average value of the normal incidence sound absorption coefficient for sound having a frequency of 315-800 is more preferably 45% or more, and further preferably 50% or more.

It is preferable that the fiber for sound absorbing/insulating material of the invention has the average value of the normal incidence sound absorption coefficient for sound having a frequency of 400-630 Hz at 38% or more.

The fiber for sound absorbing/insulating material of the invention has a particular excellency in the normal incidence sound absorption coefficient for sound having a frequency of 400-630 Hz, and is excellent in sound absorption/insulation of the engine sound.

From this viewpoint, the average value of the normal incidence sound absorption coefficient for sound having a frequency of 400-630 Hz is more preferably 45% or more, and further preferably 50% or more.

The fibers used for the fiber for sound absorbing/insulating material of the invention are not limited in particular, but synthetic fibers such as acrylic fiber, polyester fiber, nylon fiber and the like, or semi-synthetic fibers such as acetate, promix and the like can be suitably used.

Among them, in light of weight saving, acrylic fiber and nylon fiber having lower specific gravity can be more suitably used. Further, in light of sound absorbing property and productivity of fibers with small fineness, acrylic fiber can be far more suitably used.

By using the acrylic fiber as the fiber for sound absorbing/insulating material of the invention, a sound absorbing property for sound having a frequency of 200-1000 Hz can be excellent.

It is preferable that, in the fiber for sound absorbing/insulating material of the invention, a fiber length of a single fiber is 3-60 mm. In a case that the fiber length is 3-60 mm, dispersibility of the fiber is excellent and a molded product can be easily molded. The fiber length is more preferably 15-40 mm and far more preferably 20-35 mm.

It is preferable that, in the fiber for sound absorbing/insulating material of the invention, the number of crimps is 8-14 pieces/25 mm and the rate of crimp is 5-9 %.

In a case that the number of crimps is 8-14 pieces/25 mm and the rate of crimp is 5-9 %, a molding property when manufacturing a fiber assembly becomes excellent.

It is preferable that, in the fiber for sound absorbing/insulating material of the invention, the average value of the normal incidence transmission loss for sound having a frequency of 200-4000 Hz is 9.0 dB or more.

The measurement method of the normal incidence transmission loss is to measure the normal incidence transmission loss depending on ASTM E2611 in a case that 70 mass % of fiber for sound absorbing/insulating material having a fiber length of 40 mm, and 30 mass% of polyester thermally fusible fibers having a fiber length of 51 mm and a melting point of 110 °C are mixed; heated at 170 °C for 20 minutes; and cooled to form a fiber-molded product having a thickness of 30 mm and a basis weight of 1200 g/m².

In a case that the average value of the normal incidence transmission loss for sound having a frequency of 200-4000 Hz is 9.0 dB or more, the transmitted sound from an outside of automobiles or an engine room into a car room can be efficiently buffered. From this viewpoint, the average value of the normal incidence transmission loss is more preferably 10.0 dB or more and further preferably 11.0 dB or more.

It is preferable that, in the fiber for sound absorbing/insulating material of the invention, the average value of the normal incidence transmission loss for sound having a frequency of 200-1000 Hz is 6.3 dB or more.

In a case that the average value of the normal incidence transmission loss for sound having a frequency of 200-1000 Hz is 6.3 dB or more, the engine sound from the dash part can be easily insulated. From this viewpoint, the average value of the normal incidence transmission loss is more preferably 6.5 dB or more and further preferably 7.0 dB or more.

A manufacturing method of a fiber for sound absorbing/insulating material of the invention is that a spinning solution in which acrylonitrile copolymer is dissolved with a solvent to have a solid content concentration at 10-30 mass% is discharged from a discharge hole of a spinning nozzle into an aqueous solution having a temperature of 20-60 °C and a solvent concentration of 25-50 mass% to have a single fiber fineness of 0.01-0.5 dtex.

In a case that the solid content concentration of the spinning solution is 10 mass% or more, solvent substitution in a coagulation bath is conducted smoothly, and in a case that a solid content concentration of the spinning solution is 30 mass% or less, viscosity of the spinning solution does not become excessively high and cut of the thread is hard to occur, which are preferable. From these viewpoints, the solid content concentration of the spinning solution is preferably 15-28 mass% and more preferably 18-25 mass%.

It is preferable that the fiber of the invention having a single fiber fineness of 0.01-0.5 dtex and in which the average value of the normal incidence sound absorption coefficient of the fiber-molded product for sound having a frequency of 200-1000 Hz is 40% or more is used as a sound absorbing/insulating material.

Since the fiber having a single fiber fineness of 0.01-0.5 dtex is excellent in sound absorbing/insulating properties, it can be suitably used as a sound absorbing/insulating material.

As described above, an acrylic fiber can be suitably used as an absorbing/insulating material of the invention. An example for a case using an acrylic fiber is explained as below.

The acrylic fiber of the invention is composed of acrylonitrile and an unsaturated monomer which can be copolymerized with acrylonitrile. As such unsaturated monomers, the following can be used; acrylic acid, methacrylic acid or alkyl ester thereof, vinyl acetate, acrylamide, vinyl chloride, and vinylidene chloride. In addition, depending on an objective, ionic unsaturated monomers such as sodium vinylbenzene sulfonate, sodium methallylsulfonate, sodium allylsulfonate, sodium acrylamidomethylpropane sulfonate, sodium parasulfofenyl metallyl ether and the like.

A content of acrylonitrile unit in polymer is preferably 80% or more, particularly preferably 85% or more, and as an upper limit, preferably 99% or less.

These vinyl monomers may be used alone or by combining two or more kinds of them. Further, acrylonitrile polymer constituting an acrylic fiber of the invention may be composed of one kind of polymer, or may be a mixture of more than two kinds of polymers having different acrylonitrile content.

As methods for copolymerizing the above acrylic polymers, suspension polymerization, solution polymerization and the like can be selected, but it is not limited thereto. The molecular weight of the above acrylic polymer is not limited in particular as long as it is within a normal range applied in manufacturing acrylic fiber. However, it is preferable that the reduced viscosity at 25 °C is within a range of 1.5-3.0 in a case of 0.5 mass% dimethylformamide solution.

### <spinning dope>

The spinning dope is prepared by dissolving an acrylic polymer in a solvent so as to be 15 mass%-28 mass%. In a case that the concentration is 15 mass% or more, a desired cross-sectional shape can be easily obtained since a difference between a shape of a nozzle hole and a shape of fiber cross section is not large in coagulation. On the other hand, in a case that the concentration is 28 mass % or less, a temporal stability of the spinning dope and a stability of spinning yarn are excellent.

As slovents, in addition to organic solvents such as dimethylformamide, dimethylacetamide and dimethyl sulfoxide and the like, nitric acid, rhodanide solution and zinc chloride solution can be used. However, in a case that the cross-sectional shape is to be controlled by the nozzle hole, the organic solvent is more advantageously used.

### <spinning>

A spinning and taking are conducted so that a spinning draft, which is defined by a ratio between a taking speed of coagulated yarns and a discharging linear velocity of the spinning dope, is within a range of 0.7-3.0, thereby an excellent spinning state can be maintained. In a case that the spinning draft is 0.7 or more, a desired cross-sectional shape can be easily obtained since a difference between a shape of a nozzle hole and a shape of fiber cross section is small in coagulation and unevenness of the cross section can be suppressed. On the other hand, in a case that the spinning draft is 3.0 or less, cut of yarn in a coagulation bath solution less happens and it becomes easy to obtain fibers itself.

The obtained coagulated yarn is drawn, washed and dried by known methods and conditions, and the obtained fiber can be a raw material by cutting it in a predetermined length depending on use.

The fiber-molded product for sound absorbing/insulating material of the invention is manufactured by partially fusing fiber L (a fiber for sound absorbing/insulating material having a single fiber fineness of 0.01-0.5 dtex) and the like with thermally fusible fibers such as polyester fibers. The fiber-molded product for sound absorbing/insulating material of the invention can contain fiber M (another fiber having a single fiber fineness of more than 0.5 dtex and 1.0 dtex or less other than fiber L or a thermally fusible fiber) other than fiber L and a thermally fusible fiber.

The fiber-molded product for sound absorbing/insulating material of the invention is the one having a basis weight D of 400-2000 g/m² and a thickness of 20-50 mm, and satisfying the following condition (1) or (2).
(1) A content C of fiber L is 20-90 mass% and a relationship between a basis weight D (g/m²) and the content C of the fiber L (mass%) satisfies a condition D ≥ 1600 - 30 × C.
(2) A content of fiber L is 5-30 mass%, further fiber M is contained, and the sum of content of the fiber L and the fiber M is 40-90 mass%.

Since the fiber-molded product for sound absorbing/insulating material of the invention has excellent sound insulating/absorbing properties and is lightweight, it can be suitably used for preventing noises in a car room of automobiles.

In a case that the basis weight of the fiber-molded product for sound absorbing/insulating material of the invention is 400 g/m² or more, sound absorbing/insulating properties tend to be excellent, and in a case that it is 2000 g/m² or less, it is easy to be lightweight, which are preferable. From these viewpoints, the basis weight is more preferably 500 -1800 g/m², and further preferably 600 -1500 g/m².

Moreover, in a case that the thickness of the fiber-molded product for sound absorbing/insulating material of the invention is 20 mm or more, sound absorbing/insulating properties tend to be excellent, and in a case that it is 50 mm or less, it is easy to be lightweight, which are preferable. From these viewpoints, the thickness is more preferably 23-40 mm, and further preferably 25-35 mm.

As for the content C of fiber L in the above (1), in a case that the content C of fiber L is 20 mass% or more, sound absorbing/insulating properties tend to be excellent. In a case that it is 90 mass% or less, a thermally fusible fiber or a fiber N (a fiber having a single fiber fineness of larger than 1.0 dtex other than a thermally fusible fiber) can be contained, thereby a shape stability can be easily obtained and cost can be easily reduced.

From these viewpoints, the content C of fiber L is more preferably 30-80 mass% and further preferably 40-60 mass%.

As for the relationship between the basis weight D and the content C of fiber L (D ≥ 1600-30 × C) in the above (1), in order to secure sound absorbing/insulating properties, it is necessary to increase the basis weight in a case of small content C of fiber L, and it is necessary to increase the content C of fiber L in a case of small basis weight.

As for the above (2), in a case that the content C of fiber L is relatively small, that is: 5-30 mass%, sound absorbing/insulating properties can be improved by further containing fiber M so as the sum content of fiber L and fiber M to be 40 mass% or more. In a case that the content C of fiber L is 90 mass% or less, a shape stability can be easily obtained and cost can be easily reduced since the content of the thermally fusible fiber is not excessively small.

It is preferable that, in the fiber-molded product for sound absorbing/insulating material of the invention, the average value of the normal incidence sound absorption coefficient for sound having a frequency of 200-1000 Hz is preferably 40% or more.

In a case that the average value of the normal incidence sound absorption coefficient for sound having a frequency of 200-1000 Hz is 40% or more, a buffering effect of an engine sound and the transmitted sound from a dash part can be excellent. From this viewpoint, the average value of the normal incidence sound absorption coefficient is more preferably 43% or more, and further preferably 46 % or more.

It is preferable that, in the fiber-molded product for sound absorbing/insulating material of the invention, fiber L is an acrylic fiber. In a case that an acrylic fiber whose single fiber fineness of 0.01-0.5 dtex, which is relatively small, is used as fiber L, sound absorbing property for sound having a frequency of 200-1000 Hz can be excellent as shown in Fig. 1.

It is preferable that, in the fiber-molded product for sound absorbing/insulating material of the invention, the average value of the normal incidence transmission loss for sound having a frequency of 200-4000 Hz is 9.0 dB or more.

In a case that the average value of the normal incidence transmission loss for sound having a frequency of 200-4000 Hz is 9.0 dB or more, transmitted sound from outside the automobile or an engine room to an inside of the automobiles can be efficiently buffered. From this viewpoint, the average value of the normal incidence transmission loss is more preferably 10.0 dB or more and further preferably 11.0 dB or more.

It is preferable that, in the fiber-molded product for sound absorbing/insulating material of the invention, a content of thermally fusible fiber is 10-50 mass% and it is fixed by the thermally fusible fiber. Since the fibers composing the molded product are fixed with the thermally fusible fiber, its shape can be kept even in a complex shape, which is preferable.

In a case that the content of thermally fusible fiber is 10 mass% or more, the shape of the fiber-molded product can be easily maintained. In a case that it is 50 mass% or less, the fiber for sound absorbing/insulating material of the invention can be contained, thereby the absorbing/insulating properties tend to be excellent.

From these viewpoints, the content of thermally fusible fiber is more preferably 15-45 mass% and further preferably 20-40 mass%.

It is preferable that a single fiber fineness of the thermally fusible fiber used for the fiber-molded product for sound absorbing/insulating material of the invention is 1-5 dtex.

In a case that the single fiber fineness of the thermally fusible fiber is 1 dtex or more, fibers composing the fiber-molded product for sound absorbing/insulating material can be easily fixed with each other. In a case that the single fiber fineness of the thermally fusible fiber is 5 dtex or less, lowering of sound absorption coefficient can be reduced.

From these viewpoints, it is more preferable that the single fiber fineness of the thermally fusible fiber is 1.5-3 dtex.

The fiber-molded product for sound absorbing/insulating material of the invention is manufactured by partially fusing fiber L, fiber M and the like with a thermally fusible fiber. A fiber having a single fiber fineness of 1.0 dtex or more can be used as fiber N, and its content can be 5-70 mass%.

For cost reduction, fiber N can be contained within a range that the average value of the normal incidence sound absorption coefficient for sound having a frequency of 200-1000 Hz is 40 % or more in light of the sound absorbing/insulating properties.

In a case that the content of fiber N is 5 mass% or more, an effect for cost reduction is significant. In a case that the content of fiber N is 70 mass% or less, a range in which the absorbing/insulating properties are excellent can be easily maintained.

In light of the effect for cost reduction, it is preferable that a recycled fiber is used as fiber N.

From these viewpoints, the content of fiber N is more preferably 15-60 mass% and further preferably 20-50 mass%.

The fiber-molded product for sound absorbing/insulating material of the invention may contain inorganic fibers such as glass fibers, mineral fibers and the like to apply a flame resistant property.

### <Examples>

Hereinafter, the invention is specifically explained showing Examples. Measurements of each items in Examples depended on the following methods.

### <method for measuring a single fiber fineness>

Using an auto vibroscope fineness tester (Search Co., Ltd. DenierComputer DC-11), measurement was conducted under the conditions of temperature: 25 °C and moisture: 65%. Moreover, measurement was conducted 25 times, and their average value was applied.

### <method for measuring the number of crimps and rate of crimp>

They were measured depending on JIS L 1015 (2010) 8.12.

### <method for measuring the normal incidence sound absorption coefficient and the normal incidence transmission loss >

70 mass% of the fiber for sound absorbing/insulating material cut in 40 mm and 30 mass% of polyester thermally fusible fiber (single fiber fineness: 2.2 dtex, fiber length: 51 mm, melting point: 110 °C) were mixed, heated at 170 °C for 20 minutes, and then cooled to form a fiber-molded product having a thickness of 30 mm and a basis weight of 1200 g/m².

Specifically, total weight of 72 g of mixed-cotton raw material was put into an container having a length of 200 mm, a side of 300 mm and a height of 50 mm, compressed to be a height of 30 mm and thermally molded.

Then, the normal incidence sound absorption coefficient (hereinafter, it is also referred to as "sound absorption coefficient") and the normal incidence transmission loss (hereinafter, it is also referred to as "transmission loss") within a range of predetermined frequencies were respectively measured depending on JIS A 1405-2 and ASTEM E2611. Measuring device manufactured by Nihon Onkyo Engineering, WinZac model, was used.

### (Example 1)

A copolymer composed of 93 mass% of acrylonitrile unit and 7 mass% of vinyl acetate unit was obtained by water-based suspension polymerization. A reduced viscosity of the copolymer in 0.5 mass% of dimethylformamide solution at 25 °C was 2.0. The copolymer was dissolved in dimethylacetamide to be a spinning dope having 24 mass% of copolymer concentration. The spinning dope was discharged from a discharge hole of a spinning nozzle into 50% solution of dimethylacetamide at 40 °C and spun. Further, it was drawn to 5 times with hot water at 95 °C, washed, oil applied, and dried by a dry roll. Moreover, by machine crimping, fiber A having the number of crimps of 10 piece/25 mm, the rate of crimp of 7% and a single fiber fineness of 0.1 dtex described in Table 1 was obtained.

The sound absorbing coefficient and the transmission loss of fiber A were measured using the aforementioned measuring method. The result is shown in Table 2.

### (Examples 2-4, Reference Example 1)

Fiber B - fiber E were obtained in the same manner as in Example 1 except that the obtained fineness was adjusted by changing a mass flow of the spinning dope from a spinning nozzle.

After that, a fiber-molded product was manufactured in the same manner as in Example 1, and the sound absorption coefficient and the transmission loss were measured. The result is shown in Table 2.

### (Comparative Example 1)

Using polyester (PET) fiber F having a single fiber fineness of 0.5 dtex, the sound absorption coefficient and the transmission loss were measured in the same manner as in Example 1. The result is shown in Table 2.

Comparing acrylic fibers and polyester fibers with the same fiber fineness, a property of the sound absorption coefficient of acrylic fibers is more excellent than the one of polyester fibers.

However, it is assumed that if a single fiber fineness of the polyester fiber is made to be small, the property of the sound absorption coefficient can be enhanced. It can be guessed from effects of the sound absorption coefficient using several kinds of single fiber fineness of acrylic fibers.

### (Comparative Example 2)

Acrylic fiber G was obtained in the same manner as in Example 1 except that the obtained fineness was adjusted to be 3.3 dtex by changing a mass flow of the spinning dope from a spinning nozzle.

After that, a fiber-molded product was manufactured in the same manner as in Example 1, and the sound absorption coefficient and the transmission loss were measured. The result is shown in Table 2.

Since the single fiber fineness is large, the values of both the sound absorption coefficient and the transmission loss were low.

**[Table 1]**

| | Component of fiber assembly (mass%) | | | | | | | | Basis weight (g/m²) | Thickness (mm) |
|---|---|---|---|---|---|---|---|---|---|---|
| | Fiber A | Fiber B | Fiber C | Fiber D | Fiber E | Fiber F | Fiber G | Thermally Fusible Fiber | | |
| Single fiber fineness | 0.1dtex | 0.3dtex | 0.4dtex | 0.5dtex | 1dtex | 0.5dtex | 3.3dtex | 2.2dtex | 1200 | 30 |
| Raw material | Acrylic | Acrylic | Acrylic | Acrylic | Acrylic | Polyester | Acrylic | Polyester | | |
| Example 1 | 70 | | | | | | | 30 | | |
| Example 2 | | 70 | | | | | | 30 | | |
| Example 3 | | | 70 | | | | | 30 | | |
| Example 4 | | | | 70 | | | | 30 | | |
| Reference Example 1 | | | | | 70 | | | 30 | | |
| Comparative Example 1 | | | | | | 70 | | 30 | | |
| Comparative Example 2 | | | | | | | 70 | 30 | | |

**[Table 2]**

| | Evaluation of Acoustics | | | | | | |
|---|---|---|---|---|---|---|---|
| | Normal incidence sound absorption coefficient (%) | | | Normal incidence transmission loss (dB) | | | |
| | Average value at 200∼1000Hz | Average value at 315∼800Hz | Average value at 400∼630Hz | Average value at 200∼4000Hz | Average value at 200∼1000Hz | Average value at 315∼800Hz | Average value at 400∼630Hz |
| Example 1 | 46 | 57 | 63 | 16.8 | 10.0 | 9.5 | 9.1 |
| Example 2 | 48 | 56 | 61 | 13.3 | 8.0 | 7.5 | 7.4 |
| Example 3 | 49 | 57 | 60 | 11.5 | 6.4 | 6.8 | 6.9 |
| Example 4 | 41 | 46 | 46 | 10.7 | 7.0 | 6.4 | 6.1 |
| Reference Example 1 | 44 | 49 | 47 | 9.7 | 6.8 | 6.6 | 6.4 |
| Comparative Example 1 | 37 | 41 | 40 | 10.4 | 6.8 | 6.5 | 6.3 |
| Comparative Example 2 | 33 | 36 | 34 | 5.2 | 3.8 | 3.8 | 3.8 |

### (Example 5)

Short fiber A (fiber L) produced by cutting fiber A having a single fiber fineness of 0.1 dtex obtained in Example 1 in 40 mm, a thermally fusible polyester short fiber (thermally fusible fiber) having a single fiber fineness of 2.2 dtex and a fiber length of 50 mm, and a regular acrylic short fiber (fiber N) having a single fiber fineness of 3.3 dtex and a fiber length of 50 mm are prepared. Then, 50 mass% of short fiber A, 30 mass% of thermally fusible polyester short fiber and 20 mass% of regular acrylic short fiber are mixed, heated at 170 °C for 20 minutes, and a non-woven fabric having a basis weght of 1200 g/m² and a thickness of 30 mm was obtained.

The result for measuring the sound absorption coefficient and the transmission loss is shown in Table 3.

### (Example 6)

A non-woven fabric was obtained in the same manner as in Example 5 except that a mixture rate of the short fiber to be mixed was changed as shown in Table 3.

The result for measuring the sound absorption coefficient and the transmission loss is shown in Table 3.

### (Example 7)

A non-woven fabric was obtained in the same manner as in Example 5 except that the short fiber A (fiber L), the polyester short fiber (fiber M) having a single fiber fineness of 0.6 dtex and a fiber length of 32 mm, the thermally fusible polyester short fiber (thermally fusible fiber) and the regular acrylic short fiber (fiber N) were mixed with the mixture rate shown in Table 3.

The result for measuring the sound absorption coefficient and the transmission loss is shown in Table 3.

### (Examples 8 and 9)

A non-woven fabric was obtained in the same manner as in Example 7 except that a mixture rate of the short fiber to be mixed was changed as shown in Table 3.

The result for measuring the sound absorption coefficient and the transmission loss is shown in Table 3.

### (Comparative Example 3)

A non-woven fabric was obtained in the same manner as in Example 5 except that a mixture rate of the short fiber to be mixed was changed as shown in Table 3.

The result for measuring the sound absorption coefficient and the transmission loss is shown in Table 3.

Since less amount of acrylic fibers with sound absorbing/insulating properties of the invention was contained, sound absorption coefficient was lowered.

### (Comparative Example 4)

A non-woven fabric was obtained in the same manner as in Example 5 except that a mixture rate of the short fiber to be mixed was changed as shown in Table 3.

The result for measuring the sound absorption coefficient and the transmission loss is shown in Table 3.

Since the regular acrylic fiber contained no acrylic fiber with sound absorbing/insulating properties of the invention and had a thick single fiber fineness, the sound absorption coefficient was not able to be enhanced.

### (Comparative Example 5)

A non-woven fabric was obtained in the same manner as in Example 5 except that a mixture rate of the short fiber to be mixed was changed as shown in Table 3.

The result for measuring the sound absorption coefficient and the transmission loss is shown in Table 3.

Since the polyester fiber contained no acrylic fiber with sound absorbing/insulating properties of the invention and had a single fiber fineness of 0.6 dtex, the sound absorption coefficient was not able to be enhanced.

### (Example 10)

A non-woven fabric was obtained in the same manner as in Example 5 except that a basis weight of the non-woven fabric was changed to 600 g/m².

The result for measuring the sound absorption coefficient and the transmission loss is shown in Table 3.

### (Example 11)

A non-woven fabric was obtained in the same manner as in Example 10 except that a mixture rate of the short fiber to be mixed was changed as shown in Table 3.

The result for measuring the sound absorption coefficient and the transmission loss is shown in Table 3.

### (Comparative Example 6)

A non-woven fabric was obtained in the same manner as in Example 10 except that a mixture rate of the short fiber to be mixed was changed as shown in Table 3.

The result for measuring the sound absorption coefficient and the transmission loss is shown in Table 3.

Though a content of the acrylic fiber of the invention was 30 mass%, the sound absorption coefficient was lowered since the basis weight was small.

### (Comparative Example 7)

A non-woven fabric was obtained in the same manner as in Example 10 except that a mixture rate of the short fiber to be mixed was changed as shown in Table 3.

The result for measuring the sound absorption coefficient and the transmission loss is shown in Table 3.

Since a content of the acrylic fibers with sound absorbing/insulating properties of the invention was small, the sound absorption coefficient was lowered.

### (Comparative Example 8)

A non-woven fabric was obtained in the same manner as in Example 10 except that a mixture rate of the short fiber to be mixed was changed as shown in Table 3.

The result for measuring the sound absorption coefficient and the transmission loss is shown in Table 3.

Since the regular acrylic fiber contained no fiber with sound absorbing/insulating properties of the invention and had a thick single fiber fineness, the sound absorption coefficient was not able to be enhanced.

### (Comparative Example 9)

A non-woven fabric was obtained in the same manner as in Example 10 except that a mixture rate of the short fiber to be mixed was changed as shown in Table 3.

The result for measuring the sound absorption coefficient and the transmission loss is shown in Table 3.

Since the polyester fiber contained no acrylic fiber with sound absorbing/insulating properties of the invention and had a single fiber fineness of 0.6 dtex, the sound absorption coefficient was not able to be enhanced.

**[Table 3]**

| | Component of fiber assembly (mass%) | | | | Basis Weight D (g/m²) | Thickne ss (mm) | 1600-30C | Normal incidence sound absorption coefficient (%) | | | Normal incidence transmission loss (dB) | |
|---|---|---|---|---|---|---|---|---|---|---|---|---|
| | Fiber L | Fiber M | Thermally Fusible Fiber | Fiber N | | | | | | | | |
| Single fiber fineness | 0.1dtex | 0.6dtex | 2.2dtex | 3.3dtex | | | | Average value at 200∼1000Hz | Average value at 315∼800Hz | Average value at 400∼630HZ | Average value at 200∼4000Hz | Average value at 200∼1000Hz |
| Raw material | Acrylic Fiber | Polyester Fiber | Polyester Fiber | Acrylic Fiber | | | | | | | | |
| Example 5 | 50 | 0 | 30 | 20 | 1,200 | 30 | 100 | 49 | 59 | 64 | 11.6 | 7.3 |
| Example 6 | 30 | 0 | 30 | 40 | 1,200 | 30 | 700 | 45 | 51 | 50 | 10.1 | 7.0 |
| Example 7 | 25 | 25 | 30 | 20 | 1,200 | 30 | 850 | 46 | 53 | 56 | 11.0 | 7.6 |
| Example 8 | 20 | 30 | 30 | 20 | 1,200 | 30 | 1,000 | 46 | 53 | 56 | 10.2 | 7.1 |
| Example 9 | 10 | 40 | 30 | 20 | 1,200 | 30 | 1,300 | 41 | 51 | 53 | 9.0 | 6.8 |
| Comparative Example 3 | 10 | 0 | 30 | 60 | 1,200 | 30 | 1,300 | 38 | 42 | 39 | 7.1 | 5.4 |
| Comparative Example 4 | 0 | 0 | 30 | 70 | 1,200 | 30 | 1,600 | 26 | 28 | 27 | 5.3 | 4.3 |
| Comparative Example 5 | 0 | 50 | 30 | 20 | 1,200 | 30 | 1,600 | 39 | 45 | 47 | 8.1 | 6.0 |
| Example 10 | 50 | 0 | 30 | 20 | 600 | 30 | 100 | 41 | 44 | 43 | 6.4 | 4.1 |
| Example 11 | 25 | 25 | 30 | 20 | 600 | 30 | 850 | 33 | 37 | 36 | 5.9 | 4.2 |
| Comparative Example 6 | 30 | 0 | 30 | 40 | 600 | 30 | 700 | 32 | 35 | 33 | 5.4 | 3.7 |
| Comparative Example 7 | 10 | 0 | 30 | 60 | 600 | 30 | 1,300 | 29 | 31 | 30 | 3.8 | 2.9 |
| Comparative Example 8 | 0 | 0 | 30 | 70 | 600 | 30 | 1,600 | 22 | 24 | 23 | 2.4 | 1.9 |
| Comparative Example 9 | 0 | 50 | 30 | 20 | 600 | 30 | 1,600 | 32 | 34 | 34 | 4.4 | 3.3 |
| 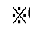 C: Content of Fiber L(%) | | | | | | | | | | | | |

### INDUSTRIAL APPLICABILITY

The fiber for sound absorbing/insulating material of the invention is used to be a fiber assembly such as a non-woven fabric and is used as a sound absorbing/insulating material, thereby it can be applied advantageously to materials (interior and exterior materials of automobiles and sound absorbing/insulating material for building materials) to which lightweight and quietness are required. Therefore, it is extremely useful and high industrial applicability.

## Claims

1. A fiber for sound absorbing/insulating material wherein, when the fiber has a single fiber fineness of 0.01-0.5 dtex, and is formed to be a fiber-molded product described below, an average value of a normal incidence sound absorption coefficient of the fiber-molded product for sound having a frequency of 200-1000 Hz is 40% or more. (fiber-molded product)
70 mass % of the fiber for sound absorbing/insulating material having a fiber length of 40 mm, and 30 mass% of polyester thermally fusible fiber having a single fiber fineness of 2.2 dtex, a fiber length of 51 mm, and a melting point of 110 °C are mixed; heated at 170 °C for 20 minutes; and then cooled to form the fiber-molded product having a thickness of 30 mm and a basis weight of 1200 g/m².

2. The fiber for sound absorbing/insulating material according to claim 1, wherein, in the fiber-molded product, the average value of the normal incidence sound absorption coefficient for sound having a frequency of 315-800 Hz is 40% or more.

3. The fiber for sound absorbing/insulating material according to claim 1 or 2, wherein, in the fiber-molded product, the average value of the normal incidence sound absorption coefficient for sound having a frequency of 400-630 Hz is 38% or more.

4. The fiber for sound absorbing/insulating material according to any one of claims 1 to 3, wherein the fiber for sound absorbing/insulating material is an acrylic fiber.

5. The fiber for sound absorbing/insulating material according to any one of claims 1 to 4, wherein a fiber length of the single fiber is 3-60 mm.

6. The fiber for sound absorbing/insulating material according to any one of claims 1 to 5, wherein the number of crimps is 8-14 pieces/25 mm and the rate of crimp is 5-9 %.

7. The fiber for sound absorbing/insulating material according to any one of claims 1 to 6, wherein, in the fiber-molded product, the average value of the normal incidence transmission loss for sound having a frequency of 200-4000 Hz is 9.0 dB or more.

8. The fiber for sound absorbing/insulating material according to any one of claims 1 to 7, wherein the average value of the normal incidence transmission loss for sound having a frequency of 200-1000 Hz is 6.3 dB or more.

9. A manufacturing method of a fiber for sound absorbing/insulating material wherein acrylonitrile copolymer is dissolved with a solvent, and a spinning solution having a solid content concentration of 10-30 mass% is discharged from a discharge hole of a spinning nozzle into an aqueous solution having a temperature of 20-60 °C and a solvent concentration of 25-50 mass% to have a single fiber fineness of 0.01-0.5 dtex.

10. A use of a fiber as a sound absorbing/insulating material wherein, when the fiber has a single fiber fineness of 0.01-0.5 dtex, and is formed to be a fiber-molded product described below, an average value of a normal incidence sound absorption coefficient of the fiber-molded product for sound having a frequency of 200-1000 Hz is 40% or more.
(fiber-molded product)
70 mass % of the fiber for sound absorbing/insulating material having a fiber length of 40 mm, and 30 mass% of polyester thermally fusible fiber having a single fiber fineness of 2.2 dtex, a fiber length of 51 mm, and a melting point of 110 °C are mixed; heated at 170 °C for 20 minutes; and then cooled to form a fiber-molded product having a thickness of 30 mm and a basis weight of 1200 g/m².

11. A fiber-molded product for sound absorbing/insulating material containing a fiber for sound absorbing/insulating material having a single fiber fineness of 0.01-0.5 dtex (hereinafter, it is also referred to as "fiber L"), a thermally fusible fiber, and if necessary, a fiber other than the fiber L and the thermally fusible fiber and having a single fiber fineness of more than 0.5 dtex and of 1.0 dtex or less (hereinafter, it is also referred to as "fiber M"),
having a basis weight D of 400-2000 g/m² and a thickness of 20-50 mm, and
satisfying the following condition (1) or (2).
(1) A content C of fiber L is 20-90 mass% and a relationship between the basis weight D (g/m²) and the content C of fiber L (mass%) satisfies a condition: D ≥ 1600-30 × C.
(2) A content of fiber L is 5-30 mass%, further fiber M is contained, and the sum of content of fiber L and fiber M is 40-90 mass%.

12. The fiber-molded product for sound absorbing/insulating material according to claim 11, wherein an average value of a normal incidence sound absorption coefficient for sound having a frequency of 200-1000 Hz is 40% or more.

13. The fiber-molded product according to claim 11 or 12, wherein the fiber L is an acrylic fiber.

14. The fiber-molded product for sound absorbing/insulating material according to any one of claims 11 to 13, wherein the average value of the normal incidence transmission loss for sound having a frequency of 200-4000 Hz is 9.0 dB or more.

15. The fiber-molded product for sound absorbing/insulating material according to any one of claims 11 to 14, containing 10-50 mass% thermally fusible fiber which is partially melted and fixed with each other.

16. The fiber-molded product for sound absorbing/insulating material according to any one of claims 11 to 15, wherein further a content of the fiber N other than the thermally fusible fiber and having a single fiber fineness of more than 1.0 dtex is 5-70 mass%.
